# EUROPEAN PATENT APPLICATION

(11) **EP 4 629 297 A1**
(43) Date of publication of application: **08.10.2025**
(21) Application number: 24211441.1
(22) Date of filing: 07.11.2024
(51) Int. Cl.: H01M 4/04, B21C 47/24, B65H 19/29, H01M 4/131, H01M 4/133

(54) **APPARATUS AND METHOD FOR PREVENTING DEFORMATION OF ELECTRODE PLATE FOR SECONDARY BATTERY**

(30) Priority: 01.04.2024 KR 20240044246
(71) Applicant: SAMSUNG SDI CO., LTD., Yongin-si, Gyeonggi-do 17084 (KR)
(72) Inventor: Kim, Yongsoo, 17084 Yongin-si, Gyeonggi-do (KR); Hong, Chan, 17084 Yongin-si, Gyeonggi-do (KR)
(74) Representative: Gulde & Partner

(57) **Abstract**

Disclosed herein are an apparatus and a method for preventing deformation, such as curvature or skew, of an electrode plate (80, 80a, 80b) for a secondary battery. The apparatus includes: a reel (200) with an electrode plate (80, 80a, 80b) for a secondary battery wound therearound; and a compression band (300, 400, 500, 600, 700, 800) wrapping a circumferential surface of the electrode plate (80, 80a, 80b) wound around the reel (200) and compressing the electrode plate (80, 80a, 80b) toward a center of the reel (200).

## Description

### BACKGROUND

### 1. Field

Aspects of embodiments of the present disclosure relate to an apparatus and a method for preventing deformation of an electrode plate for a secondary battery.

### 2. Description of the Related Art

Different from primary batteries, which are not designed to be (re)charged, secondary batteries are designed to be charged and discharged. Generally, a secondary battery may include an electrode assembly including (or composed of) a positive electrode plate, a negative electrode plate, and a separator and an exterior material (e.g., a case or can) that accommodates the electrode assembly. The electrode assembly may be classified as a wound type and a stack type electrode assembly depending on a stack type of the electrode plate and the separator. The wound type is often referred to as a jelly roll, and the stack type is often simply referred to as a stack.

The positive electrode plate and the negative electrode plate of the electrode assembly may be manufactured through a process of applying a mixture (e.g., a slurry) including an active material on a substrate, a process of rolling the electrode plate coated with the mixture, and a slitting process of cutting the rolled electrode plate along a longitudinal direction (e.g., the moving direction of the electrode plate).

Induction heating annealing (IHA) may be used during the rolling process to prevent the electrode plate from skewing due to internal stress generated during the rolling process after the coating process. However, IHA only addresses an initial skew value, and the electrode plate may increasingly skew even after the post-process (e.g., slitting process).

The above information disclosed in this Background section is for enhancement of understanding of the background of the present disclosure, and therefore, it may contain information that does not constitute related (or prior) art.

### SUMMARY

Accordingly, embodiments of the present disclosure reduce or prevent deformation, such as curvature or skew, of an electrode plate for a secondary battery.

In an embodiment, an apparatus for preventing deformation of an electrode plate includes a reel with an electrode plate for a secondary battery wound therearound and a compression band wrapping a circumferential surface of the electrode plate wound around the reel and compresses the electrode plate toward a center of the reel. The electrode plate may be an electrode plate produced through a post-process after a material coating and rolling process but is not limited thereto.

The compression band may have a linear shape with two ends.

The compression band may include a fastener at one end thereof and which may be configured to connect the ends of the compression band to apply a compression force to the electrode plate.

The compression band may be a linear air tube that is configured to expanded by air injection to increase a compression force applied to the electrode plate.

The compression band may include a plurality of air pockets arranged in a longitudinal direction of the linear air tube.

The compression band may be an annular air tube that is configured to be expanded by air injection to increase a compression force applied to the electrode plate.

An inner diameter of the compression band may be equal to or smaller than an outer diameter of the reel.

The compression band may include a plurality of air pockets arranged in a circumferential direction of the annular air tube.

The compression band may include a plurality of air pockets arranged in a circumferential direction of the annular air tube, and each of the air pockets may have a flat surface along an inner diameter of the compression band.

The apparatus may further comprise a spacer film between the electrode plate and the compression band.

The apparatus may further include an instrument for measuring a strength of a compression force applied to the electrode plate.

A compression force applied to the electrode plate may be in a range of 1 kgf to 10 kgf (1 kgf = 9.806650 N).

In another embodiment, a method for preventing deformation of an electrode plate includes wrapping a compression band around a circumferential surface of an electrode plate for a secondary battery that is wound around a reel and reducing a diameter of the compression band wrapped around the reel to compress the electrode plate.

The compression band, before being wrapped around the electrode plate, may be linear with both ends and may include a fastener at one end thereof configured to connect both ends of the compression band, and the reducing of the diameter of the compression band may include fastening both ends of the compression band by using the fastener and clamping the fastener so that the diameter of the compression band may be reduced to compress the electrode plate.

The compression band may include an air tube with an air valve, and the reducing of the diameter of the compression band may include expanding the air tube by injecting air through the air valve into the air tube.

Aspects and features of the present disclosure are not limited to those described above, and other aspects and features not specifically mentioned herein will be clearly understood by those skilled in the art from the description of the present disclosure below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 schematically illustrates an electrode assembly of a secondary battery;
FIG. 2 schematically illustrates a pouch-type secondary battery;
FIG. 3 is a cross-sectional view of a cylindrical secondary battery;
FIG. 4 illustrates an internal configuration of a prismatic secondary battery;
FIG. 5 is a schematic diagram of a process of manufacturing an electrode plate of the electrode assembly illustrated in FIG. 1;
FIG. 6 is a schematic view of a post-process including a slitting unit and a rewinder;
FIG. 7 is a schematic view of a slit electrode plate in which a coated layer and a non-coated layer coexist;
FIG. 8 is a graph describing acceleration of skew deformation over time after a post-process is completed;
FIG. 9 illustrates an apparatus for preventing deformation of an electrode plate for a secondary battery according to an embodiment of the present disclosure;
FIG. 10 illustrates an apparatus for preventing deformation of an electrode plate according to another embodiment of the present disclosure;
FIG. 11 illustrates an electrode plate that is pressed by wrapping a compression band shown in FIG. 10 around a reel;
FIG. 12 illustrates an apparatus for preventing deformation of an electrode plate according to another embodiment of the present disclosure;
FIG. 13 illustrates an electrode plate that is pressed by wrapping a compression band shown in FIG. 12 around a reel;
FIG. 14 illustrates an apparatus for preventing deformation of an electrode plate according to another embodiment of the present disclosure;
FIG. 15 illustrates an electrode plate that is pressed by wrapping a compression band shown in FIG. 14 around a reel;
FIG. 16 illustrates an apparatus for preventing deformation of an electrode plate according to another embodiment of the present disclosure;
FIG. 17 illustrates an electrode plate that is pressed by wrapping a compression band shown in FIG. 16 around a reel;
FIG. 18 illustrates an apparatus for preventing deformation of an electrode plate according to another embodiment of the present disclosure;
FIG. 19 is a graph describing changes in skew of an electrode plate wound around a reel according to the related art;
FIG. 20 is a graph describing changes in skew when an electrode plate wound around a reel is pressed and stored with a compression band according to an embodiment of the present disclosure;
FIG. 21 is a view of a secondary battery module in which secondary batteries are arranged according to one or more embodiments of the present disclosure;
FIG. 22 is a view of a secondary battery pack including the secondary battery module illustrated in FIG. 21; and
FIG. 23 is a conceptual view of a vehicle including the secondary battery pack illustrated in FIG. 22.

### DETAILED DESCRIPTION

Hereinafter, embodiments of the present disclosure will be described, in detail, with reference to the accompanying drawings. The terms or words used in the present specification and claims are not to be limitedly interpreted as having their respective general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

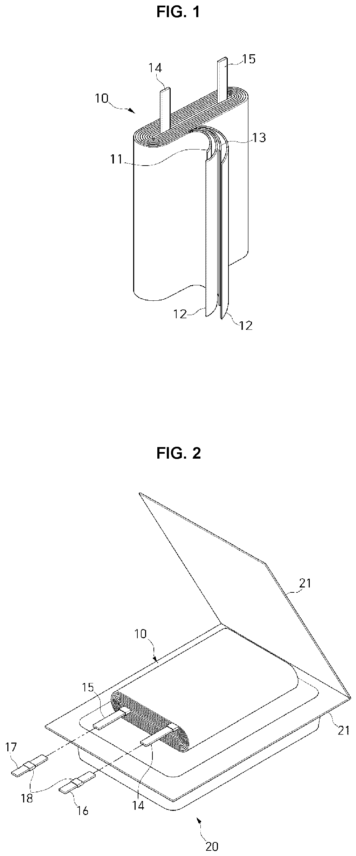

FIG. 1 shows an electrode assembly of a secondary battery.

Referring to FIG. 1, an electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to the longitudinal direction of a case. In other embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

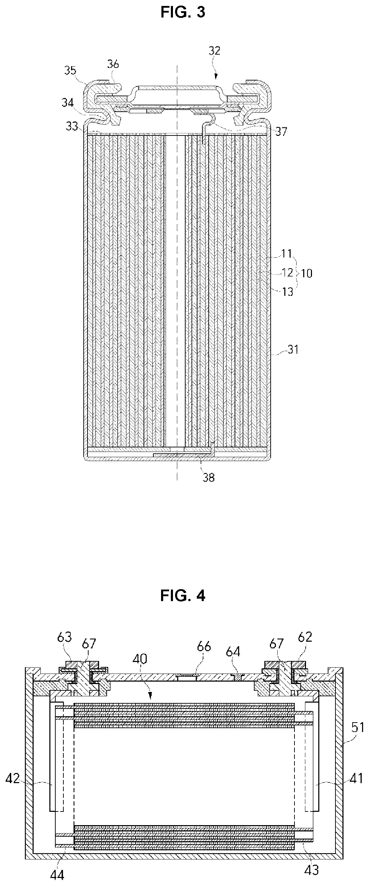

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 4).

FIG. 2 schematically illustrates the pouch-type secondary battery.

The pouch-type secondary battery includes an electrode assembly 10 and a pouch 20 that accommodates the electrode assembly 10.

The electrode assembly 10 may be the same as that illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with (e.g., covered by) a tab film 18 for insulation from the pouch 20.

The pouch 20 may be sealed by having sealing parts 21 at the edges thereof come into contact with each other while accommodating the electrode assembly 10 therein, and the sealing may be achieved with the tab film 18 interposed between the sealing parts 21. The sealing parts 21 of the pouch 20 may each be made of a thermal fusion material that generally exhibits weak adhesion to metal. Thus, the pouch 20 may be fused together by interposing the tab film 18 between the sealing parts 21 to ensure a sufficient seal.

FIG. 3 illustrates a cylindrical secondary battery. As shown in FIG. 3, a secondary battery may include an electrode assembly 10, a case 31 accommodating the electrode assembly 10 and an electrolyte therein, a cap assembly 32 coupled to an opening in the case 31 to seal the case 31, and an insulating plate 33 positioned between the electrode assembly 10 and the cap assembly 32 inside the case 31.

The case 31 accommodates the electrode assembly 10 and the electrolyte, and, together with the cap assembly 32, forms an external appearance of the secondary battery. The case 31 may have a substantially cylindrical body portion and a bottom portion connected to one side (e.g., to one end) of the body portion. A beading part 34 (e.g., a bead) deformed inwardly may be formed in the body portion, and a crimping part 35 (e.g., a crimp) bent inwardly may be formed at an open end of the body portion.

The beading part 34 can reduce or prevent movement of the electrode assembly 10 inside the case 31 and can facilitate seating of a gasket 36 and the cap assembly 32. The crimping part 35 may firmly fix the cap assembly 32 by pressing the edge of the case 31 against the gasket 36. The case 31 may be formed of iron plated with nickel, for example.

The cap assembly 32 may be fixed to the inside of the crimping part 35 by the gasket 36 to seal the case 31. A first lead tab 37 drawn out from the electrode assembly 10 may be connected to the cap assembly 32, and a second lead tab 38 drawn out from the electrode assembly 10 may be electrically connected to the bottom of the case 31.

FIG. 4 shows an internal structure of a prismatic secondary battery.

As shown in FIG. 4, a prismatic secondary battery may include an electrode assembly 40, a first current collector 41, a first terminal 62, a second current collector 42, a second terminal 63, a case 51, and a cap assembly 60.

The electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction of the case 51. In other embodiments, the electrode assembly 40 may be a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies 40 may be stacked such that long sides of the electrode assemblies 40 are adjacent to each other and accommodated in the case 51, and the number of electrode assemblies 40 in the case 51 is not limited in the present disclosure. The first electrode plate of the electrode assembly may act as a negative electrode, and the second electrode plate may act as a positive electrode. Of course, the reverse is also possible.

In the electrode assembly 40, the first current collector 41 and the second current collector 42 may be welded and connected to the first electrode tab 43 extending from the first electrode plate and the second electrode tab 44 extending from the second electrode plate, respectively. As described above, in embodiments in which the first electrode tab 43 and the second electrode tab 44 are located at the top of the electrode assembly 40, the first and second current collectors are located at the top of the electrode assembly 40.

As illustrated in FIG. 4, the first current collector 41 and the second current collector 42 are connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited thereto. In other embodiments, the connection members 67 may be coupled to the first terminal 62 and the second terminal 63 by riveting or welding.

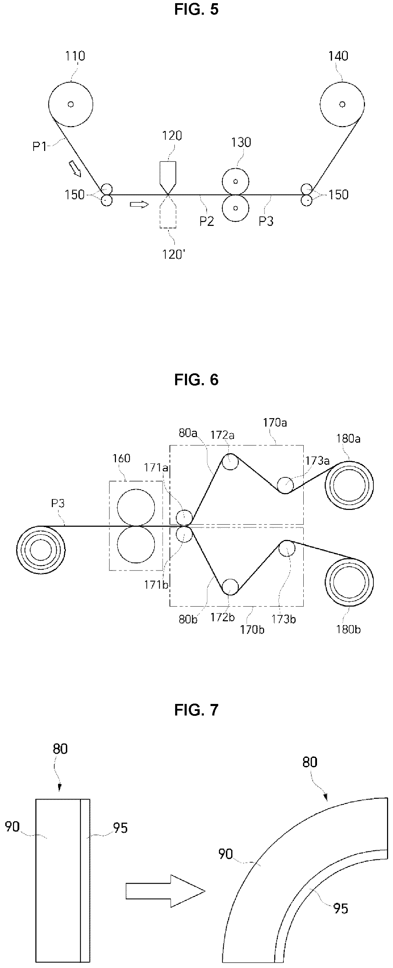

FIG. 5 is a schematic diagram describing a process for manufacturing an electrode plate (e.g., the first electrode plate 11 or the second electrode plate 13) of the electrode assembly 10 illustrated in FIG. 1 or the electrode assembly 40 illustrated in FIG. 4.

A supply roll 110 is a roll on which a substrate P1 for an electrode plate is wound. When an apparatus for manufacturing electrode plates according to embodiments the present disclosure is used to manufacture a positive electrode plate, the substrate P1 may be a metal foil including (or containing) aluminum (Al), for example. Alternatively, when the apparatus for manufacturing electrode plates according to embodiments of the present disclosure is used to manufacture a negative electrode plate, the substrate P1 may be a metal foil including (or containing) copper (Cu) or nickel (Ni).

A transfer roller 150 may be an idle roller that guides the substrate P1 as it is unwounded from the supply roll 110 or a drive roller that applies a pulling force to unwind the substrate P1 from the supply roll 110. FIG. 5 illustrates an embodiment including a total of four transfer rollers 150 as an example only, and the number and positions of transfer rollers may be varied.

A coating unit 120 forms a coating layer by coating the substrate P1 with an electrode material slurry that is previously prepared. The slurry for coating includes (or contains) an active material. When the apparatus for manufacturing electrode plates according to embodiments of the present disclosure is used to manufacture the positive electrode plate, the slurry may include (or contain) an active material containing a transition metal oxide, a binder, a volatile solvent, and the like, for example. When the apparatus is used to manufacture the negative electrode plate, the slurry may be prepared with (e.g., may include) an active material containing a transition metal oxide, a binder, a solvent, or the like. Moreover, both surfaces, namely the upper and lower surfaces, of the substrate P1 may be coated (e.g., may be concurrently or simultaneously coated) by adding a second coating unit 120', having the same configuration as the coating unit 120 illustrated in FIG. 5, to the lower surface of the substrate P1.

A press unit (e.g., a rolling unit) 130 includes a rolling roller to compresses an electrode plate P2 coated with the slurry (e.g., a mixture of materials) by the coating unit 120 to produce a high-capacity and high-density secondary battery.

A winding roll 140 is a roll that winds and accommodates an electrode plate P3 coated by the coating unit 120 and rolled by the press unit 130.

In some embodiments, a drying unit may be added between the coating unit 120 and the winding roll 140 to dry or solidify the electrode plate P2 coated with the slurry. The drying unit may include a heat source. The drying unit may be physically separated from or may be functionally integrated into the press unit 130. For example, when the press unit 130 is configured in the form of a roller, the roller may be equipped with a heat source to simultaneously heat and roll the coating layer such that the press unit 130 also acts as a drying unit.

The electrode plate P3 that is rolled by the press unit 130 and wound around the winding roll 140 is input into a post-process (e.g., undergoes post-processing). The post-process may include a slitting process of cutting the electrode plate P3 along the longitudinal direction (e.g., the electrode plate moving direction).

FIG. 6 is a schematic view illustrating the slitting process. A device that performs the slitting process (e.g., a slitting apparatus) may include a slitting unit 160 and a transfer unit 170a and 170b for transferring slit electrode plates 80a and 80b to respective rewinders 180a and 180b.

The electrode plates 80a and 80b separated by being slit (e.g., cut along the longitudinal direction of the electrode plate, such as the moving direction) by the slitting unit 160 may be transferred to the rewinders 180a and 180b through a plurality of rollers 171a to 173a and 171b and 171c respectively included in transfer units 170a and 170b and rewound.

The slitting unit 160 cuts the electrode plate P3 after it is coated and rolled in the process shown in FIG. 5 into a plurality of rows along a cutting line parallel to the moving direction and separates each row. After the slitting process, a slit electrode plate 80 in the form of a strip having a coated portion 90 provided with a coated layer and an uncoated portion 95 with a relatively thin thickness without a coated layer as illustrated in, for example, FIG. 7 is obtained.

Because a region rolled by the press unit 130 shown in FIG. 5 is primarily a region with a thicker mixture-coated portion (e.g., the coated portion), the amount of elongation due to rolling in the coated portion is greater than that in the uncoated portion, resulting in a difference in the amount of elongation between the two regions. Before slitting is performed, the width of the electrode plate is relatively wide, such that the stress generated due to the difference in the amount of elongation is distributed and the electrode plate does not deform. However, because the width of the slit electrode plate 80 (see, e.g., FIG. 7) slit during the post-process illustrated in FIG. 6 is relatively narrow, the stress due to the difference in the amount of elongation between the coated portion 90 and the uncoated portion 95 is no longer uniformly distributed, such that the electrode plate 80 may be easily curved or skewed (see, e.g., FIG. 7). When such deformation in the electrode plate is accumulated, breakage or miss winding of the electrode plate may occur during a subsequent assembly process, such as winding or notching.

A deformation problem, such as curvature or skew, of the electrode plate is not only a problem in the uncoated portion 95 and the coated portion 90 of the electrode plate 80 slit after coating and rolling as illustrated in FIG. 7 but also in the electrode plate during other processes and for any electrode plate having portions with different thicknesses, such as thin and thick portions as well as the uncoated portion and the coated portion.

To alleviate or minimize deformation of the electrode plate, a related art method uses induction heat annealing (IHA) to the uncoated portion to increase the ductility (e.g., to reduce the tensile strength) of a substrate foil (e.g., Al, Cu, etc.) and to increase the amount of elongation of the uncoated portion in a press process. However, with the trend of making high energy density electrodes, the degree of compression in a rolling process is increasing, resulting in a deviation in the amount of elongation between a coated portion and an uncoated portion. In this regard, additional and/or new electrode deformation reduction methods are needed to avoid deformation of the electrode plate.

In addition, the related art solutions focusing only on an initial amount of deformation of an electrode plate, but actually, stress accumulated inside the electrode plate is gradually relieved, and the degree of deformation of the electrode plate tends to continuously increase over time. For example, even after the electrode plate P3 rolled by the press unit 130 illustrated in FIG. 5 is slit by the slitting unit 160 in the post-process illustrated in FIG. 6 and the slit electrode plates 80a and 80b are rewound around the rewinders 180a and 180b or on the reel, deformation such as skew of the electrode plate may accelerate over time.

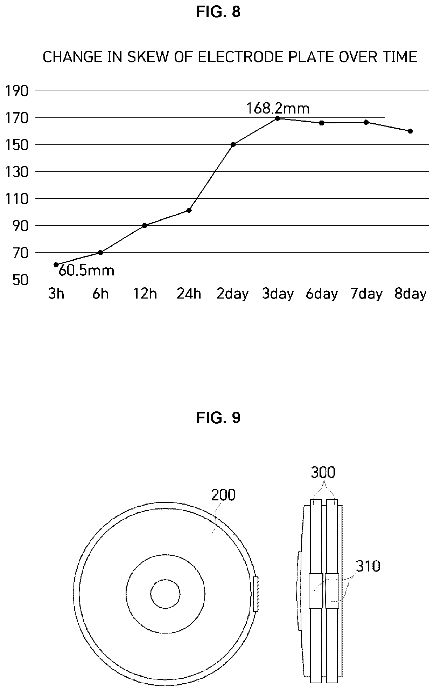

FIG. 8 is a graph describing acceleration of skew deformation over time after the post-process is completed. The amount of skew of a 4 m long electrode plate subjected to mixture coating, rolling, and post-processing (slitting) was measured over time. After 3 hours, the electrode plate has deformed 60.5 mm, with the amount of skew gradually increasing, then rapidly increasing after 24 hours before reaching its maximum value of 168.2mm between about the second day to the third day, after when the deformation is almost entirely maintained. Such a change in the amount of skew of the electrode plate over time may appear differently depending on the storage method of the electrode plate wound around the reel.

Embodiments of the present disclosure use a device that compresses the outer peripheral portion of an electrode plate wound around a reel to suppress deformation that increases over time when the electrode plate wound around the reel is stored after completing post-processing (e.g., slitting) subsequent to coating and rolling.

FIG. 9 illustrates an apparatus for preventing deformation of an electrode plate for a secondary battery according to an embodiment of the present disclosure.

The apparatus for preventing deformation of an electrode plate, according to an embodiment of the present disclosure, includes a reel 200 on which an electrode plate for a secondary battery is wound and a compression band 300 that wraps around the circumferential surface of the electrode plate wound around the reel 200 and compresses the electrode plate by applying a force toward the center of the reel 200.

The electrode plate wound around the reel 200 may be an electrode plate subjected to a post-process (e.g., a slitting process) subsequent to a coating and rolling process. By wrapping the compression band 300 around the outer peripheral portion (e.g., the circumferential surface) of the reel 200 and applying a force toward the center of the electrode plate, deformation of the electrode plate over time, such as curvature and skew, is reduced or prevented.

The compression band 300 has a linear shape between both ends, and a fastener 310 (e.g., hook/ring, adhesive tape, Velcro, buckle, etc.) may be attached to at least one end of the compression band 300. The fastener 310 may fasten (or connect) both ends of the compression band 300 and clamp to compress the electrode plate by reducing the diameter of the compression band 300 having a ring shape accordingly and increasing the compression strength of the electrode plate. To compress the electrode plate with an appropriate force by using the fastener 310, an instrument for measuring the compression strength (e.g., a pressure gauge, a tension gauge, etc.) may be used. Based on an experiment measuring the degree of deformation of the electrode plate according to the compression strength, the compression strength that effectively suppresses deformation of the electrode plate may be in a range of about 1 kgf to 10 kgf and may be, in one embodiment, about 5 kgf.

The width of the compression band 300 may be equal to or larger than the width of the electrode plate wound around the reel 200 or may be smaller than the width of the electrode plate.

The number of compression bands 300 may vary depending on the width of the band. For example, when the width of the compression band 300 is equal to or greater than the width of the electrode plate wound around the reel 200, the number of compression bands 300 may be one. In other embodiments, when the width of the compression band 300 is smaller than the width of the electrode plate wound around the reel 200, two or more compression bands 300 may be used as illustrated in, for example, FIG. 9.

The material of the compression band 300 may be a material that can compress the electrode plate wound around the reel 200 without damaging the electrode plate. For example, the compression band 300 may be manufactured from a synthetic resin, such as polyethylene, nylon, and vinyl, metal, paper, fabric, or the like.

To prevent damage to the electrode plate, a spacer film, such as paper, synthetic resin, or fabric, may be inserted between the electrode plate and the compression band 300. In addition, a soft material (e.g., fleece, fiber, fabric, non-woven fabric, etc.) may be coated or bonded to the surface (e.g., at least a contact surface with the electrode plate) of the compression band 300.

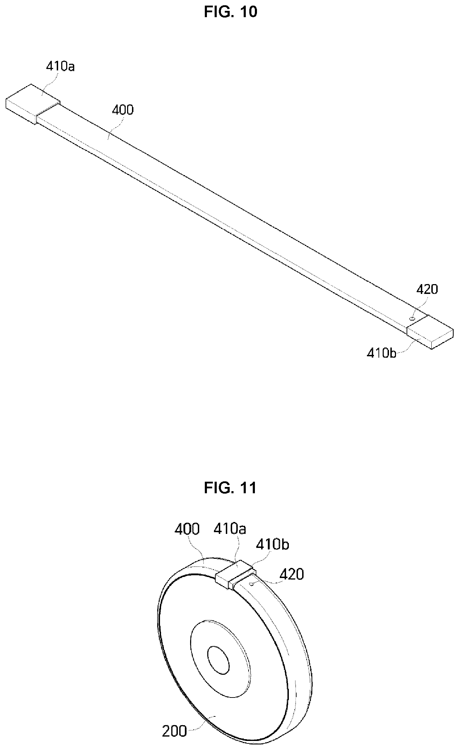

FIG. 10 illustrates an apparatus for preventing deformation of an electrode plate according to another embodiment.

A compression band 400 according to another embodiment is in the form of a linear air tube, and an air valve 420 may be provided to a portion of the tube to expand the tube by injecting air into the air valve 420 with an air gun, a pump, or the like. The tube may be expanded by the injected air to uniformly compress the electrode plate wound around the reel 200. After a time compressing the electrode plate, the air may be removed through the air valve 420. In addition to the air gun or the pump for air injection, an instrument for measuring compression strength may be used to ensure that the compression band 400 compresses the electrode plate with an appropriate force. Based on an experiment measuring the degree of deformation of the electrode plate according to the compression strength, the compression strength that effectively suppresses deformation of the electrode plate may be in a range of about 1 kgf to about 10 kgf and may be, in one embodiment, about 5 kgf.

FIG. 11 illustrates a linear air tube-type compression band 400 that is wrapped around the circumference of the electrode plate wound around the reel 200 and is connected by fasteners 410a and 410b, and air is injected through the air valve 420 to press the electrode plate.

In the illustrated embodiment, the fasteners 410a and 410b may be attached to at least one end of the air tube. However, the fasteners 410a and 410b in this embodiment primarily fasten (or connect) both ends of the linear air tube while the clamping is primarily provided by the expansion of the air tube.

Similar to the embodiment shown in FIG. 9, the compression band 400 may use a material that may compress the electrode plate wound around the reel 200 without damaging the electrode plate and may be expanded by injected air. For example, the air tube-type compression band 400 may be manufactured from a synthetic resin, such as polyethylene, nylon, and vinyl.

To reduce or minimize damage to the electrode plate, a spacer film, such as paper, synthetic resin, or fabric may be inserted between the electrode plate and the compression band 400, and a soft material (e.g., fleece, fiber, fabric, non-woven fabric, etc.) may be coated on or bonded to the surface of the air tube (e.g., at least a contact surface with the electrode plate).

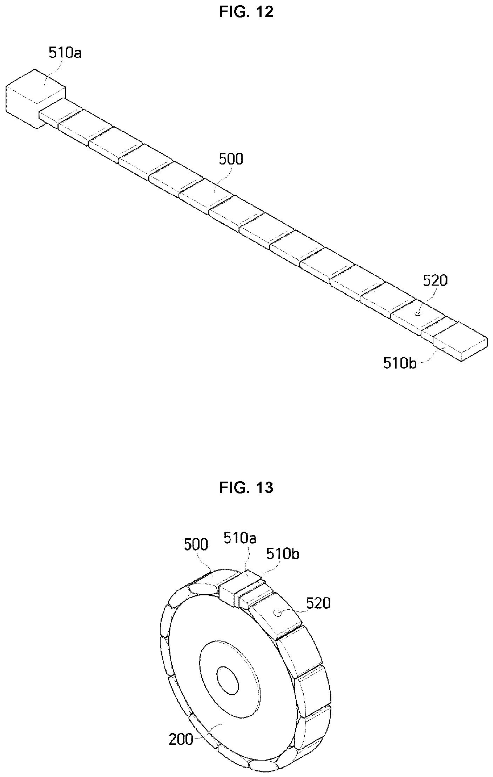

FIG. 12 illustrates an apparatus for preventing deformation of an electrode plate according to another embodiment.

A compression band 500, according to another embodiment, has a shape similar to the linear air tube illustrated in FIG. 10 but has a plurality of air pockets arranged in the longitudinal direction of the tube. The air pockets may be configured to allow air to pass through (or between) each other while generally maintaining the shape of each pocket. According to this embodiment, because each air pocket is expanded when air is injected through an air valve 520, more uniform pressure may be applied across the circumferential surface of the electrode plate. In this embodiment, in addition to an air gun or a pump for air injection, an instrument for measuring a compression strength may be used to maintain a certain (or reference) compression strength. A compression strength that effectively suppresses deformation of the electrode plate may be in a range of about 1 kgf to 10 about kgf and may be, in one embodiment, about 5 kgf.

FIG. 13 illustrates the linear air tube-type compression band 500 having air pockets that is wrapped around the circumference of the electrode plate wound around the reel 200 and connected by fasteners 510a and 510b, and air is injected through the air valve 520 to press the electrode plate.

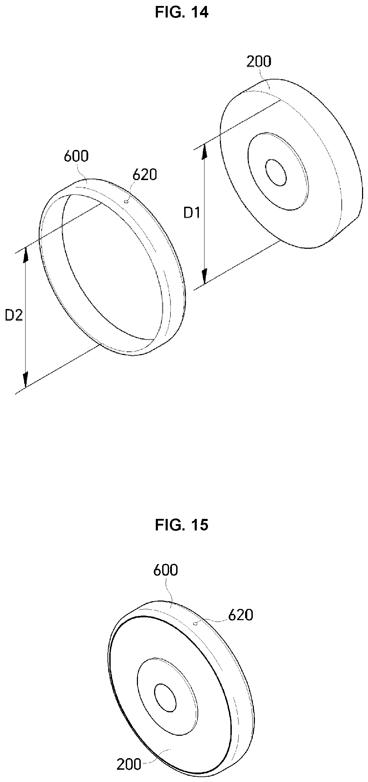

FIG. 14 illustrates an apparatus for preventing deformation of an electrode plate according to another embodiment.

A compression band 600, according to another embodiment, is an annular air tube and may omit the fasteners 410a, 410b, 510a, and 510b in the previous embodiments. Because there is no fastener, the compression band 600 must not be easily separated from the reel 200 until air is injected once the compression band 600 is wrapped around the circumferential surface of the reel 200. Thus, an inner diameter D2 of the annular compression band 600 is approximately equal to or slightly smaller than an outer diameter D1 of the reel 200. At least until air is injected through an air valve 620, such dimensions prevent the compression band 600 wrapped around the reel 200 from separating from the reel 200.

Even in the annular air tube compression band 600 according to this embodiment, similar to the linear air tube compression bands 400 and 500 described above, the air valve 620 may be provided to a portion of the tube to expand the tube by air injected through an air gun or a pump. In addition to an air gun or a pump for air injection, an instrument for measuring a compression strength may be used to maintain a certain (or reference) compression strength. A compression strength that effectively suppresses deformation of the electrode plate may be in a range of about 1 kgf to 10 about kgf and may be, in one embodiment, about 5 kgf.

FIG. 15 illustrates an annular air tube-type compression band 600 that is wrapped around the circumference of the electrode plate wound around the reel 200, and air is injected through the air valve 620 to press the electrode plate.

Similarly to the above-described embodiment, the compression band 600 may be made of a material that can compress the electrode plate wound around the reel 200 without damaging the electrode plate and can be additionally expanded by injected air. For example, the air tube-type compression band 600 may be manufactured from a synthetic resin, such as polyethylene, nylon, and vinyl.

To reduce or minimize damage to the electrode plate, a spacer film, such as paper, synthetic resin, or fabric, may be inserted between the electrode plate and the compression band 600, and a soft material (e.g., fleece, fiber, fabric, non-woven fabric, etc.) may be coated or bonded to the surface (at least a contact surface with the electrode plate) of the air tube.

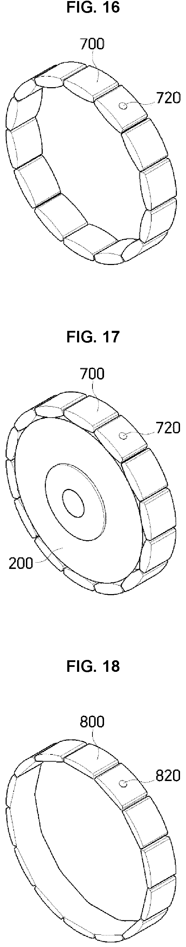

FIG. 16 illustrates an apparatus for preventing deformation of an electrode plate according to another embodiment.

A compression band 700, according to another embodiment, has a shape similar to the annular air tube illustrated in FIG. 14 but has a shape in which a plurality of air pockets are arranged in the circumferential direction of the tube (see, e.g., FIG. 12). The air pockets may be configured to allow air to pass through (or between) each other to generally maintain the shape of each pocket. According to this embodiment, because each air pocket is expanded when air is injected through an air valve 720, more uniform pressure may be applied across the circumferential surface of the electrode plate. In addition to an air gun or a pump for air injection, an instrument for measuring a compression strength may be used to maintain a certain compression strength. A compression strength that effectively suppresses deformation of the electrode plate may be in a range of about 1 kgf to 10 about kgf and may be, in one embodiment, about 5 kgf.

FIG. 17 illustrates the annular air tube-type compression band 700 having air pockets that is wrapped around the circumference of the electrode plate wound around the reel 200 and air is injected through the air valve 720 to press the electrode plate.

FIG. 18 illustrates an apparatus for preventing deformation of an electrode plate according to another embodiment.

Different from the annular air tube with air pockets illustrated in FIG. 16, a compression band 800, according to another embodiment, may be formed so that air pockets each have a flat surface along an inner diameter of the compression band 800. Thus, an outer diameter surface of the annular band may be expanded by air injection, and the annular band may be slightly expanded toward the inner diameter. According to this embodiment, even though each air pocket is expanded by air injected through an air valve 820, a flat surface is in contact with the electrode plate, thereby reducing the possibility of damage to the electrode plate.

A method for preventing deformation of an electrode plate by using the apparatuses for preventing the deformation of the electrode plate for the secondary battery described above will be briefly described.

According to some embodiments, the linear compression band 300 may be wound around the outer peripheral portion of the reel 200 with the electrode plate wound therearound, and both ends of the compression band 300 may be bound (or connected) together by using the fastener 310 to compress the electrode plate by clamping the fastener 310 so that the inner diameter of the compression band 300 having a ring shape accordingly is reduced. The electrode plate may be produced after the completion of the post-process performed subsequent to the coating and rolling processes.

When compressing the electrode plate by clamping the fastener 310, the compression strength may be in a range of about 1 kgf to about 10 kgf and may be, in one embodiment, about 5 kgf. To prevent damage to the electrode plate, a spacer film, such as paper, synthetic resin, or fabric, may be inserted between the electrode plate and the compression band 300.

According to some other embodiments, the linear air tube-type compression band 400 may be wound around the outer peripheral portion of the reel 200 with the electrode plate produced after the completion of the post-process performed subsequent to the coating and rolling processes wound therearound, both ends of the compression band 400 may be bound (or connected) together by using the fastener 410, and air is injected into the compression band 400 having a ring shape to expand the compression band 400, thereby compressing the electrode plate so that the inner diameter of the compression band 400 is reduced.

When injecting air, the compression strength of the electrode plate may be in a range of about 1 kgf to about 10 kgf and may be, in one embodiment, about 5 kgf. To prevent damage to the electrode plate, a spacer film, such as paper, synthetic resin, or fabric, may be inserted between the electrode plate and the compression band 400.

According to other embodiments, the linear air tube-type compression band 400 or 500 may be wound around the outer peripheral portion of the reel 200 with the electrode plate produced after the completion of the post-process performed subsequent to the coating and rolling processes wound therearound, both ends of the compression band 400 or 500 may be bound (or connected) together by using the fasteners 410a and 410b or 510a and 510b, and air is injected into the compression band 400 or 500 having a ring shape to expand the compression band 400 or 500, thereby compressing the electrode plate.

When injecting air, the compression strength of the electrode plate may be in a range of about 1 kgf to 10 kgf and may be, in one embodiment, about 5 kgf. To prevent damage to the electrode plate, a spacer film, such as paper, synthetic resin, or fabric, may be inserted between the electrode plate and the compression band 400 or 500.

According to another embodiment, the annular air tube-type compression band 600, 700, or 800 may be wound around the outer peripheral portion of the reel 200 with the electrode plate produced after the completion of the post-process performed subsequent to the coating and rolling processes wound therearound, and air is injected into the compression band 600, 700, or 800 to expand the compression band 600, 700, or 800, thereby compressing the electrode plate.

When injecting air, the compression strength of the electrode plate may be in a range of about 1 kgf to about 10 kgf and may be, in one embodiment, about 5 kgf. To prevent damage to the electrode plate, a spacer film, such as paper, synthetic resin, or fabric, may be inserted between the electrode plate and the compression band 600, 700, or 800.

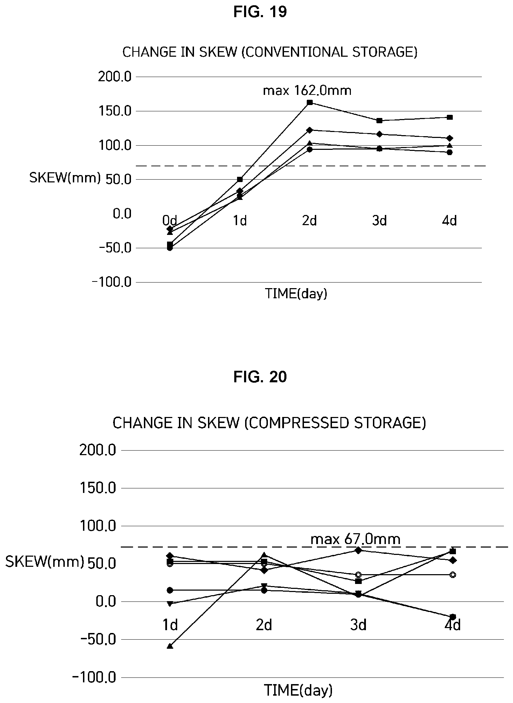

FIG. 19 is a graph describing changes in skew of an electrode plate wound on a reel and left (e.g., without compression) according to the related art, and FIG. 20 is a graph describing changes in skew when an electrode plate wound on a reel is pressed and stored with a compression band according to embodiments of the present disclosure.

FIG. 19 describes four uncompressed reel samples, and FIG. 20 describes six compressed and stored reel samples. At the second day, a maximum skew of about 162.0 mm occurred in the electrode plate wound around the reel that was simply left and stored (FIG. 19), which is generally similar to embodiment shown in FIG. 8, and all four reel samples exceeded an allowable skew value (generally about 75 mm). In the electrode plate samples that were compressed and stored with the compression band according to embodiments of the present disclosure, on the third day, a maximum skew of about 67.0 mm occurred as illustrated in FIG. 20, and all six reel samples did not exceed the above allowable skew value (generally about 75 mm). The electrode plate samples that were compressed and stored maintained a stable state with no significant change over time.

Hereinafter, any material that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from among cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<a<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector (or substrate) and a positive electrode active material layer formed on the current collector. The positive electrode active material layer may include a positive electrode active material and may include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coated layer on the surface of the core.

A negative electrode for a lithium secondary battery may include a current collector and a negative electrode active material layer disposed on the current collector. The negative electrode active material layer may include a negative electrode active material and may include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from among copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include polyethylene, polypropylene, polyvinylidene fluoride, or may be a multilayer film including two or more layers thereof.

The separator may include a porous substrate and a coated layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coated layer or may be in the form of a coated layer containing an organic material and a coated layer containing an inorganic material that are laminated on each other.

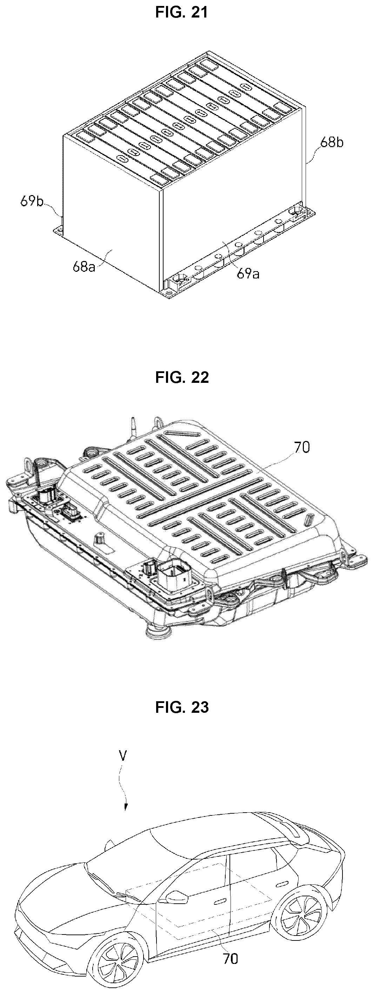

FIG. 21 is a perspective view of a secondary battery module in which prismatic secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a and 68b and a pair of facing side plates 69a and 69b. The secondary batteries may be arranged in an arrangement (direction) and number to obtain desired voltage and current specifications.

FIG. 22 is a perspective view of a battery pack 70 according to embodiments of the present disclosure. Referring to FIG. 22, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 23 shows a vehicle V that includes the battery pack 70 shown in FIG. 22 on the lower body thereof. The vehicle V may operate by (e.g., may be powered by) receiving power from the battery pack 70.

Embodiments of the present disclosure can suppress deformation that increases over time in an electrode plate being rewound on a reel and stored after completion of a post-process (e.g., slitting process) subsequent to a coating and rolling process or an electrode plate manufactured by another process, thereby improving the completeness of a final secondary battery product.

In addition, embodiments of the present disclosure may be a standard for the use and storage of an electrode plate reel.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

## Claims

1. An apparatus for preventing deformation of an electrode plate (80, 80a, 80b), the apparatus comprising:
a reel (200) with an electrode plate (80, 80a, 80b) for a secondary battery wound therearound; and
a compression band (300, 400, 500, 600, 700, 800) wrapping a circumferential surface of the electrode plate (80, 80a, 80b) wound around the reel (200) and compressing the electrode plate (80, 80a, 80b) toward a center of the reel (200).

2. The apparatus as claimed in claim 1, wherein the compression band (300, 400, 500, 600, 700, 800) has a linear shape with two ends.

3. The apparatus as claimed in claim 1 or 2, wherein the compression band (300, 400, 500, 600, 700, 800) comprises a fastener (310, 410, 410a, 410b, 510a, 510b) at one end thereof and configured connect the ends of the compression band (300, 400, 500, 600, 700, 800) to apply a compression force to the electrode plate (80, 80a, 80b).

4. The apparatus as claimed in any one of claims 1 to 3, wherein the compression band (300, 400, 500, 600, 700, 800) is a linear air tube that is configured to expanded by air injection to increase a compression force applied to the electrode plate (80, 80a, 80b).

5. The apparatus as claimed in claim 4, wherein the compression band (300, 400, 500, 600, 700, 800) comprises a plurality of air pockets arranged in a longitudinal direction of the linear air tube.

6. The apparatus as claimed in any one of claims 1 to 3, wherein the compression band (300, 400, 500, 600, 700, 800) is an annular air tube that is configured to be expanded by air injection to increase a compression force applied to the electrode plate (80, 80a, 80b).

7. The apparatus as claimed in claim 6, wherein an inner diameter of the compression band (300, 400, 500, 600, 700, 800) is equal to or smaller than an outer diameter of the reel (200).

8. The apparatus as claimed in claim 6 or 7, wherein the compression band (300, 400, 500, 600, 700, 800) comprises a plurality of air pockets arranged in a circumferential direction of the annular air tube.

9. The apparatus as claimed in claim 8, wherein each of the air pockets have a flat surface along an inner diameter of the compression band (300, 400, 500, 600, 700, 800).

10. The apparatus as claimed in any one of the preceding claims, further comprising a spacer film between the electrode plate (80, 80a, 80b) and the compression band (300, 400, 500, 600, 700, 800).

11. The apparatus as claimed in any one of the preceding claims, further comprising an instrument for measuring a strength of a compression force applied to the electrode plate (80, 80a, 80b).

12. The apparatus as claimed in any one of the preceding claims, wherein a compression force applied to the electrode plate (80, 80a, 80b) is in a range of 1 kgf to 10 kgf.

13. A method for preventing deformation of an electrode plate (80, 80a, 80b), the method comprising:
wrapping a compression band (300, 400, 500, 600, 700, 800) around a circumferential surface of an electrode plate (80, 80a, 80b) for a secondary battery that is wound around a reel (200); and
reducing a diameter of the compression band (300, 400, 500, 600, 700, 800) wrapped around the reel (200) to compress the electrode plate (80, 80a, 80b).

14. The method as claimed in claim 13, wherein the compression band (300, 400, 500, 600, 700, 800), before being wrapped around the electrode plate (80, 80a, 80b), is linear with both ends and comprises a fastener (310, 410, 410a, 410b, 510a, 510b) at one end thereof configured to connect both ends of the compression band (300, 400, 500, 600, 700, 800), and
wherein the reducing of the diameter of the compression band (300, 400, 500, 600, 700, 800) comprises fastening both ends of the compression band (300, 400, 500, 600, 700, 800) by using the fastener (310, 410, 410a, 410b, 510a, 510b) and clamping the fastener (310, 410, 410a, 410b, 510a, 510b) so that the diameter of the compression band (300, 400, 500, 600, 700, 800) is reduced to compress the electrode plate (80, 80a, 80b).

15. The method as claimed in claim 13 or 14, wherein the compression band (300, 400, 500, 600, 700, 800) comprises an air tube with an air valve (420, 520, 620, 720, 820), and
wherein the reducing of the diameter of the compression band (300, 400, 500, 600, 700, 800) comprises expanding the air tube by injecting air through the air valve (420, 520, 620, 720, 820) into the air tube.
